# EUROPEAN PATENT SPECIFICATION

(11) **EP 0 876 767 B1**
(45) Date of publication and mention of the grant of the patent: **06.03.2002**
(21) Application number: 97201376.7
(22) Date of filing: 07.05.1997
(51) Int. Cl.: A23L 1/16

(54) **Method of preparing filled pasta**
Verfahren zur Herstellung von gefüllten Teigwaren
Procédé de préparation de pâtes farcies

(43) Date of publication of application: 11.11.1998
(73) Proprietor: SOCIETE DES PRODUITS NESTLE S.A., 1800 Vevey (CH)
(72) Inventor: Andersson, Eva, 267 35 Bjuv (SE); Nilsson, Mats, 375 20 La Riche (FR)

(56) References cited:
- EP-A- 0 439 806
- DE-C- 4 219 570
- DE-U- 8 609 454
- FR-A- 1 176 585
- US-A- 5 059 433
- US-A- 5 186 539

## Description

The present invention relates to a method of preparing an open pasta casing with a filling. In particular to the preparation for consumption of an open pasta casing having a moisture content from 50 to 60% by weight arranged around a filling.

Filled pasta products such as Cannelloni or Tronchetti comprise a filling which is encapsulated in a pasta sheet. Such products are conventionally prepared by arranging the filled pasta products in a tray with a layer of sauce on the top and baking them in an oven. The sauce is a necessity in order to cook the pasta to a cooked texture.

This preparation method has the disadvantage that it limits the type of sauce that may be used in the cannelloni or tronchetti meal as the sauce used will have to be able withstand oven heating.

Furthermore, when these traditional pasta products are baked in a sauce, there is a tendency of the filling to run out of the pasta and to mix with the sauce leaving the pasta sheets less filled.

The present invention aims to overcome the above-mentioned drawbacks and provides a new way of preparing cannelloni which allows cannelloni or similar types of products to be prepared without sauce, while retaining the well known al dente texture of the coating pasta. Cannelloni prepared in accordance with the invention may be eaten plain or with any type of sauce. Hence, the invention avoids the problem of a baked and only partly cooked hard surface on the cannelloni, as is normally the result when a cannelloni is baked without sauce.

According to the invention, it has surprisingly been found that an open pasta product with a filling may withstand cooking in boiling water without opening further up or any substantially leakage of the filling, and that the open end pasta product can be prepared so that the final product has an al dente texture of the outer casing.

Consequently, in a first aspect, the invention relates to a method of preparing an open pasta casing with a filling comprising
providing an open pasta casing having a moisture content from 30 to 60% by weight arranged around a filling, said pasta and filling being such that the filling is retained in the pasta casing when immersed into hot or boiling water, and
heating the product in hot or boiling water.

In particular it has been found that it is possible to re-heat products having a tubular pasta casing around a filling wherein the diameter of the open end and length of the tube are approximately the same without any substantial leakage of the filling. It is therefore also possible to prepare a boiled cannelloni product of conventional dimension i.e. an elongated tube with a filling.

Furthermore, the cannelloni according to the invention may be served with heat-sensitive sauces that do not withstand oven baking e.g. pesto sauce or mayonnaise or other cold sauces.

In addition, the invention provides the advantage of a fast re-heating of the products as opposed to the re-heating conventionally done in a tray in an oven.

The present invention distinguishes the preparation of well known filled pasta products such as Ravioli, Tortellini or other filled pasta shells which conventionally are prepared for consumption by re-heating or boiling the product in water, in that all these products have a closed pasta shell or casings encapsulating the filling during the re-heating or boiling. The Ravioli and Tortellini are conventionally made by enclosing a filling in a raw pasta sheet. The filled products referred to in connection with the invention all have non-closed pasta casings.

In preparing the pasta casing according to the invention, the raw pasta used for the casing comprises 15 to 30% moisture. In a preferred embodiment the raw pasta comprises 20 to 24 % moisture. Pasta sheets of this type of pasta, e.g. 1 mm thick, generally require boiling from 1 to 5 minutes in order to reach the desired moisture content which gives the desired al dente texture. According to the invention it has been found that by blanching the pasta sheets so as to raise the moisture content to 30 to 60%, advantageously from 50 to 60%, open end tubes of pasta may be formed in which a filling can be deposited. At this moisture content overlapping blanched pasta sheets will adhere well to one another and forming of tubes can be done. Furthermore, when these filled tubes subsequently are subjected to further heating in water retain the filling inside the tube.

It has been found that further increasing the moisture content of the pasta makes it unsuitable for making cannelloni that can retain a filling during re-heating as the filling tends to escape the more slippery pasta casing. On the other hand, also dried pasta with a low moisture content, e.g. 5 to 12%, has been found to be unsuitable for the present purpose. Firstly, the filling will tend to leak or flow from the casing during the initial immersing in water as the pasta casing is hard and does not provide sufficient friction against. Also, this type of pasta requires a longer cooking before the pasta casing reaches the desired texture and during the cooking the casing may furthermore enlarge causing an increased risk of the filling leaking.

The filling may comprise various types of ingredients e.g. herbs, vegetable, cheese, meat etc. The moisture content of the filling preferably being 50 to 60%, more preferably abut 55 % moisture by weight. Examples of fillings are given in example 3 and 4, by way of example only.

The pasta may be prepared from conventional flour such as Semolina, Durum, Wheat etc. Suitable recipes are given in examples 1 and 2, by way of example only.

The filled pasta casings according to the invention are preferably heated for a period no longer than 6 to 7 minutes, advantageously the product is immersed in hot or boiling water from 1 to 5 minutes, most preferably form 2 to 3 minutes.

The pasta may conveniently be in the form of a tube such as the pasta casing for a cannelloni. The tube may be made from an extruded pasta mass or from a sheet with overlapping ends. For example, the dimension of the tube may be the size of a conventional cannelloni that is about 75 mm long and with a diameter of 25 mm. However, it has been found that the tube does not need to be elongated, for example the filling is retained in the pasta tube even when the diameter is about the same as the length of the tube e.g. 25 mm.

Generally, the thickness of the raw pasta should not be more than 1.3 mm, preferably in the range of 0.9 to 1.2 mm. The corresponding blanched pasta normally has a thickness in the range of 1.0 to 1.4 mm. This is in order to ensure a sufficient cooking during the period of immersing. If the pasta is too thick it will require longer cooking e.g. up to 15 to 20 min. with the risk of the filling leaking or escaping the pasta casing.

In a preferred embodiment of the invention, the pasta and the filling comprise a gluing and coagulating agent. Said gluing and coagulating agent advantageously comprises albumen. Advantageously, the gluing and coagulating agent is egg white powder or whole eggs. It is preferred that the pasta comprises from 10 to 20 % whole egg by weight, advantageously over 15% by weight and the filling comprises at least 2% egg white powder by weight. Most preferably there is about 3% egg white powder by weight in the filling.

The method for preparation of the filled but opened pasta casing according to the invention may comprise a packing step wherein the product is filled in a package and pasteurised in said package. The product may then be stored chilled or shelf stabled depending on the preservation of the product. For the preparation for consumption, the product is then removed from the package and immersed into hot or boiling water.

The invention will now be further described with reference to examples:

### EXAMPLE 1 - Pasta dough

| Ingredients | Percent, by weight |
|---|---|
| Flour: Semolina or Durum | 75% |
| Egg white powder | 3% |
| Water | 22% |

### EXAMPLE 2 - Pasta dough

| Ingredients | Percent, by weight |
|---|---|
| Flour: Semolina or Durum | 74% |
| Whole egg | 18% |
| Water | 8% |

### EXAMPLE 3 - Spinach/Ricotta Filling

| Ingredients | Percent, by weight |
|---|---|
| Ricotta cheese | 23% |
| Spinach | 15% |
| Parmesan cheese | 4% |
| Bread crumbs | 24% |
| Egg white powder | 3% |
| Oil | 4% |
| Water | 19% |

Flavours and spices the rest.

### EXAMPLE 4 - Basil/Ricotta Filling

| | |
|---|---|
| Ricotta cheese | 33% |
| Basil | 5% |
| Parmesan cheese | 6% |
| Bread crumbs | 24% |
| Egg white powder | 3% |
| Oil | 3% |
| Water | 21% |

Flavours and spices the rest.

### EXAMPLE 5 - Cannelloni

Cannelloni are prepared by sheeting and blanching raw pasta dough. The thickness of the blanched sheets is about 1 mm. Tubes are formed of the sheets around a mandrel by overlapping the ends of the sheets.

Tube of various diameters are prepared. The tubes are filled with the fillings of example 2 and 3. The filling is extruded through the mandrel and the filled tubes are cut into appropriate lengths.

The cannelloni are immersed into boiling water and cooked for 3 to 6 minutes depending on the size of the product.

The cooked cannelloni are withdrawn from the water and examined. The pasta tubes with their filling were found to be intact and the texture of the pasta al dente.

## Claims

1. Method for preparing open pasta products wherein the tubes are at least as long as the diameter of the tubes, with casings and fillings filled therein and which are capable of being retained in the casings when the products are heated in hot or boiling water for preparation before consumption; said method comprising:
preparing a raw dough comprising 15 to 30% by weight of moisture and sheeting the dough so as to provide sheets of dough;
blanching the sheets of dough to reach a moisture content from 30 to 60% by weight of the dough;
forming tubes from the sheets;
providing fillings and filling the tubes with the fillings;
packing the filled tubes and pasteurizing the filled tubes in said packing.

2. A method according to claim 1, wherein the sheets of dough are blanched to a moisture content of 50 to 60% by weight.

3. A method according to claim 1 or 2, wherein the fillings comprise a coagulating agent.

4. A method according to claim 3, wherein the coagulating agent comprises albumen.

5. A method according to claim 4, wherein the pasta casing comprises at least 15% whole egg, the fillings comprise at least 2% egg white powder by weight.

6. A method according to any of the claims 1 to 4, wherein the dough comprises a gluing agent comprising albumen.

7. A method according to claim 6, wherein the dough has from 10 to 20% whole egg by weight.

8. A method according to claim 8, wherein the tubes have about 75 mm-long and have a diameter of about 25 mm and a thickness in the range of 0.9 to 1.2 mm.

9. A method according to any of claims 1 to 9, wherein the filled pasta products are cannellonis.

10. A method according to any of claims 1 to 10, wherein after packing in a package, the filled pasta products are pasteurised in said package to be stored as chilled products.

## Patentansprüche

1. Verfahren zur Herstellung von offenen Teigwarenprodukten, bei denen die Röhren wenigstens so lang sind wie der Durchmesser der Röhren, mit Hüllen und in diese gefüllten Füllungen, die in der Lage sind, in den Hüllen festgehalten zu werden, wenn die Produkte zur Zubereitung vor dem Verzehr in heißem oder siedendem Wasser erhitzt werden, wobei das Verfahren umfaßt:
Herstellen eines Rohteigs, der 15 bis 30 Gew.-% Feuchtigkeit aufweist, und die Formung des Teigs zu Blättern, um auf diese Weise Teigblätter bereitzustellen;
Blanchieren der Teigblätter, so daß sie einen Feuchtigkeitsgehalt von 30 bis 60 Gew.-% des Teigs erreichen;
Bilden von Röhren aus den Blättern;
Bereitstellung von Füllungen und Füllen der Röhren mit den Füllungen;
Verpacken der gefüllten Röhren und Pasteurisieren der gefüllten Röhren in der genannten Verpackung.

2. Verfahren nach Anspruch 1, bei dem die Teigblätter bis auf einen Feuchtigkeitsgehalt von 50 bis 60 Gew.-% blanchiert werden.

3. Verfahren nach Anspruch 1 oder 2, bei dem die Füllungen ein koagulierendes Mittel umfassen.

4. Verfahren nach Anspruch 3, bei dem das koagulierende Mittel Albumin umfaßt.

5. Verfahren nach Anspruch 4, bei dem die Teigwarenhülle wenigstens 15 Gew.-% Vollei umfaßt und die Füllungen wenigstens 2 Gew.-% Eiweißpulver umfassen.

6. Verfahren nach irgendeinem der Ansprüche 1 bis 4, bei dem der Teig ein Albumin umfassendes Klebemittel aufweist.

7. Verfahren nach Anspruch 6, bei dem der Teig von 10 bis 20 Gew.-% Vollei enthält.

8. Verfahren nach Anspruch 8, bei dem die Röhren eine Länge von etwa 75 mm und einen Durchmesser von etwa 25 mm aufweisen sowie eine Dicke im Bereich von 0,9 bis 1,2 mm.

9. Verfahren nach irgendeinem der Ansprüche 1 bis 8, bei dem die gefüllten Teigwarenprodukte Cannelloni sind.

10. Verfahren nach irgendeinem der Ansprüche 1 bis 9, bei dem nach dem Verpackungen in einer Verpackung die gefüllten Teigwarenprodukte in der genannten Verpackung für eine Lagerung als Kühlprodukte pasteurisiert werden.

## Revendications

1. Procédé pour la préparation de produits consistant en pâtes alimentaires ouvertes, dans lequel les tubes ont une longueur au moins égale au diamètre de ces tubes, avec des enveloppes et des garnitures remplissant ces dernières, qui sont capables d'être retenues dans les enveloppes lorsque les produits sont chauffés dans de l'eau chaude ou bouillante pour la préparation avant consommation ; ledit procédé concernant les étapes consistant :
à préparer une pâte brute comprenant 15 à 30 % en poids d'humidité et à laminer la pâte de manière à former des feuilles de pâte ;
à blanchir les feuilles de pâte pour atteindre une teneur en humidité de 30 à 60 % en poids de la pâte ;
à former des tubes à partir des feuilles ;
à prendre des garnitures et à remplir les tubes avec les garnitures ;
à emballer les tubes garnis, et à pasteuriser les tubes garnis dans ledit emballage.

2. Procédé suivant la revendication 1, dans lequel les feuilles de pâte sont blanchies à une teneur en humidité de 50 à 60 % en poids.

3. Procédé suivant la revendication 1 ou 2 dans lequel les garnitures comprennent un agent coagulant.

4. Procédé suivant la revendication 3, dans lequel l'agent coagulant comprend de l'albumine.

5. Procédé suivant la revendication 4, dans lequel l'enveloppe de pâte alimentaire comprend au moins 15 % d'oeufs entiers et les garnitures comprennent au moins 2 % de poudre de blanc d'oeuf en poids.

6. Procédé suivant l'une quelconque des revendications 1 à 4, dans lequel la pâte comprend un agent de collage comprenant de l'albumine.

7. Procédé suivant la revendication 6, dans lequel la pâte comprend 10 à 20 % d'oeufs entiers en poids.

8. Procédé suivant la revendication 1, dans lequel les tubes ont une longueur d'environ 75 mm, un diamètre d'environ 25 mm et une épaisseur comprise dans l'intervalle de 0,9 à 1,2 mm.

9. Procédé suivant l'une quelconque des revendications 1 à 8, dans lequel les produits consistant en pâtes alimentaires garnies sont des cannellonis.

10. Procédé suivant l'une quelconque des revendications 1 à 9, dans lequel, après conditionnement dans un emballage, les produits consistant en pâtes alimentaires garnies sont pasteurisés dans cet emballage pour leur stockage sous forme de produits réfrigérés.
